# EUROPEAN PATENT APPLICATION

(11) **EP 4 408 077 A1**
(43) Date of publication of application: **31.07.2024**
(21) Application number: 22880348.2
(22) Date of filing: 12.10.2022
(51) Int. Cl.: H04W 48/18

(54) **INFORMATION TRANSMISSION METHOD AND APPARATUS, AND SYSTEM**

(30) Priority: 15.10.2021 CN 202111203225
(71) Applicant: Huawei Technologies Co., Ltd., Shenzhen, Guangdong 518129 (CN)
(72) Inventor: ZHU, Fangyuan, Shenzhen, Guangdong 518129 (CN); LI, Yan, Shenzhen, Guangdong 518129 (CN); YING, Jiangwei, Shenzhen, Guangdong 518129 (CN)
(74) Representative: Thun, Clemens
(86) International application number: PCT/CN2022/124902
(87) International publication number: WO 2023/061412

(57) **Abstract**

This application provides an information transmission method, an apparatus, and a system. The method includes: A sensing network element receives location information of a first area from a first network element. The sensing network element receives first sensing data from a first device, where a sensing area corresponding to the first sensing data includes the first area, and the first device is configured to perform sensing. The sensing network element determines first information based on the location information of the first area and the first sensing data, where the first information indicates that a first terminal device is located in the first area. The sensing network element sends the first information to the first network element. Therefore, whether a terminal device is in the first area may be determined based on sensing data. This reduces signaling overheads.

## Description

This application claims priority to Chinese Patent Application No. 202111203225.3, filed with the China National Intellectual Property Administration on October 15, 2021 and entitled "INFORMATION TRANSMISSION METHOD, APPARATUS, AND SYSTEM", which is incorporated herein by reference in its entirety.

### TECHNICAL FIELD

This application relates to the field of communication technologies, and more specifically, to an information transmission method, an apparatus, and a system.

### BACKGROUND

With the upgrading of mobile communication technologies, a communication network is to be established in a flexible and efficient manner. Currently, in a conventional technology, a plurality of core network devices determine, based on current location information of a terminal device, whether to deliver network-related configuration information to the terminal device. For example, in a local area data network (local area data network, LADN) solution in the conventional technology, the terminal device subscribes to a data network name (data network name, DNN) corresponding to an LADN, and a relationship between a service area of an LADN and the LADN DNN is configured on the core network device. The service area of the LADN is identified by a group of tracking areas (tracking areas, TAs). When the terminal device registers with a network, the core network device determines, based on a location of the terminal device, that a TAI of the terminal device is in the service area of the LADN, and the terminal device may obtain LADN information (for example, the service area of the LADN and the LADN DNN) from the core network. For another example, a deployment area of a network slice in the conventional technology also includes a TA at a granularity. When registering with the network, the terminal device may include identification information of a network slice that the terminal device requests to access. The core network device determines, based on the location of the terminal device, that the location supports the network slice that the terminal device requests to access, and the terminal device may obtain, from the core network, the identification information of the network slice that the terminal device is allowed to access.

In consideration of an actual deployment requirement, for example, a case in which the LADN or the network slice is deployed at a stadium or a factory, deployment at the TA granularity occupies an excessively large coverage area for the stadium or the factory, resulting in high deployment costs. Therefore, a deployment area with a small granularity (for example, a cell granularity) is more suitable for the stadium or the factory. However, the core network device needs to continuously execute a positioning process on a large quantity of terminal devices to obtain fine-granularity location information of the terminal devices. This causes massive overheads. Therefore, an information transmission method, an apparatus, and a system are urgently needed to reduce signaling overheads.

### SUMMARY

This application provides an information transmission method, an apparatus, and a system, to reduce signaling overheads.

According to a first aspect, an information transmission method is provided, where the method may be executed by a sensing network element or a chip in the sensing network element, and the method includes: The sensing network element receives location information of a first area from a first network element. The sensing network element receives first sensing data from a first device, where a sensing area corresponding to the first sensing data includes the first area, and the first device is configured to perform sensing. The sensing network element determines first information based on the location information of the first area and the first sensing data, where the first information indicates that a first terminal device is located in the first area. The sensing network element sends the first information to the first network element.

That the sensing network element receives the first sensing data from the first device includes a case in which the sensing network element receives the first sensing data from one terminal device or one access network device, and also includes a case in which the sensing network element receives the first sensing data from a plurality of terminal devices, or a plurality of access network devices, or one or more terminal devices and one or more access network devices. For the latter case, the first sensing data may be understood as sensing data received from different devices, that is, multi-path sensing data, or may be understood as a result of fusion processing of the multi-path sensing data. The sensing area corresponding to the first sensing data may be understood as an area used to obtain the first sensing data. In other words, the first sensing data is obtained by performing sensing in the area. For the latter case, the area may be understood as a sum of areas used to obtain the sensing data of all paths.

Therefore, in this application, when determining that the first terminal device is in the first area, the sensing network element does not need to continuously initiate a positioning process on the terminal device, but uses a sensing capability of the access network device or the terminal device to determine, based on the sensing data, whether the terminal device is in the first area. This reduces signaling overheads.

With reference to the first aspect, in some implementations of the first aspect, the method further includes: The sensing network element determines a target access network device based on the location information of the first area. The sensing network element sends a first sensing request message to the target access network device, where the first sensing request message is used to obtain the first sensing data.

Therefore, in this application, the sensing network element may determine the target access network device, and send the first sensing request message to the target access network device, to obtain the first sensing data used to determine the first information. This avoids participation of another access network device, and reduces the signaling overheads.

With reference to the first aspect, in some implementations of the first aspect, the method further includes: The sensing network element obtains location information of the first terminal device. The determining, by the sensing network element, first information based on the location information of the first area and the first sensing data includes: The sensing network element determines the first information based on the location information of the first area, the location information of the first terminal device, and the first sensing data.

Therefore, in this application, the sensing network element may obtain the location information of the first terminal device, and determine whether the first terminal device is located in the first area, to improve determining accuracy.

With reference to the first aspect, in some implementations of the first aspect, the obtaining, by the sensing network element, location information of the first terminal device includes: The sensing network element obtains the location information of the first terminal device when the first sensing data indicates that a first object enters or exits the first area.

Therefore, in this application, a sensing capability may be used to learn of a case in which the first object, for example, a person or an object, enters or exits the first area, and the location information of the first terminal device is obtained when the first object enters or exits the first area, so that the signaling overheads can be reduced.

With reference to the first aspect, in some implementations of the first aspect, the obtaining, by the sensing network element, the location information of the first terminal device when the first sensing data indicates that a first object enters or exits the first area includes: When the first sensing data indicates that the first object enters or exits the first area, the sensing network element sends a positioning request message to a second network element, where the positioning request message is used to trigger the second network element to execute a positioning process. The obtaining, by the sensing network element, the location information of the first terminal device includes: The sensing network element receives the location information of the first terminal device from the second network element.

Therefore, in this application, the sensing capability may be used to learn of the case in which the first object, for example, the person or the object, enters or exits the first area, the positioning process is triggered when the first object enters or exits the first area, and the positioning process does not need to be continuously initiated on the terminal device, so that the signaling overheads can be reduced.

With reference to the first aspect, in some implementations of the first aspect, the positioning request message includes the location information of the first area and/or information about the sensing area corresponding to the first sensing data.

Therefore, in this application, the second network element may be requested to position the terminal device in the first area or the sensing area of the first device, so that accuracy of determining the terminal device in the first area may be improved.

With reference to the first aspect, in some implementations of the first aspect, the receiving, by a sensing network element, location information of a first area from a first network element includes: The sensing network element receives a subscription request message from the first network element, where the subscription request message is used to request to obtain identification information of a terminal device in the first area, and the subscription request message carries the location information of the first area. The sending, by the sensing network element, the first information to the first network element includes: The sensing network element sends, to the first network element, a subscription notification message used to respond to the subscription request message, where the subscription notification message carries the first information.

With reference to the first aspect, in some implementations of the first aspect, the method further includes: The sensing network element receives second sensing data from the first device, where a sensing area corresponding to the second sensing data includes the first area. The sensing network element determines second information based on the location information of the first area and the second sensing data, where the second information indicates that the first terminal device is located outside the first area. The sensing network element sends the second information to the first network element.

Therefore, in this application, if the first network element determines, based on the second sensing data, that the first terminal device exits the first area, the first network element may be notified in a timely manner that the first terminal device is located outside the first area. This improves information transmission reliability.

With reference to the first aspect, in some implementations of the first aspect, the first information includes identification information of the first terminal device.

With reference to the first aspect, in some implementations of the first aspect, the first area is any one of the following: a service area of a local area data network, a service area of a network slice, or a communication restricted and forbidden area.

Therefore, in this application, different first areas may be configured based on an actual application scenario. This improves information transmission flexibility.

With reference to the first aspect, in some implementations of the first aspect, the first network element is an access and mobility management function network element.

According to a second aspect, an information transmission method is provided, where the method may be executed by a first network element or a chip in the first network element, and the method includes: The first network element sends location information of a first area to a sensing network element. The first network element receives first information from the sensing network element, where the first information indicates that a first terminal device is located in the first area, the first information is determined based on the location information of the first area and first sensing data, and a sensing area corresponding to the first sensing data includes the first area.

Therefore, in this application, when determining that the first terminal device is in the first area, the sensing network element does not need to continuously initiate a positioning process on the terminal device, but uses a sensing capability of an access network device or the terminal device to determine, based on the sensing data, whether the terminal device is in the first area. This reduces signaling overheads.

With reference to the second aspect, in some implementations of the second aspect, the method further includes: The first network element sends first configuration information to the first terminal device based on the first information, where the first configuration information is used to trigger the first terminal device to send a service request message corresponding to a first service.

With reference to the second aspect, in some implementations of the second aspect, the method further includes: The first network element determines a first device based on the location information of the first area. The first network element sends a second sensing request message to the first device, where the second sensing request message is used to obtain the first sensing data. The first device is configured to perform sensing.

With reference to the second aspect, in some implementations of the second aspect, the sending, by a first network element, location information of a first area to a sensing network element includes: The first network element sends a subscription request message to the sensing network element, where the subscription request message is used to request to obtain identification information of a terminal device in the first area, and the subscription request message carries the location information of the first area. The receiving, by the first network element, first information from the sensing network element includes: The first network element receives, from the sensing network element, a subscription notification message used to respond to the subscription request message, where the subscription notification message carries the first information.

With reference to the second aspect, in some implementations of the second aspect, the method further includes: The first network element receives second information from the sensing network element, where the second information indicates that the first terminal device is located outside the first area, the second information is determined based on the location information of the first area and second sensing data, and a sensing area corresponding to the second sensing data includes the first area.

With reference to the second aspect, in some implementations of the second aspect, the method further includes: The first network element sends second configuration information to the first terminal device, where the second configuration information is used to delete information corresponding to the first service.

With reference to the second aspect, in some implementations of the second aspect, the first information further includes the identification information of the terminal device.

With reference to the second aspect, in some implementations of the second aspect, the first area is any one of the following: a service area of a local area data network, a service area of a network slice, or a communication restricted and forbidden area.

With reference to the second aspect, in some implementations of the second aspect, the first network element is an access and mobility management function network element.

According to a third aspect, an information transmission method is provided, where the method may be executed by a first device or a chip in the first device, and the method includes: The first device performs a sensing operation to generate first sensing data, where the first sensing data is used to determine first information, and the first information indicates that a first terminal device is located in a first area. The first device sends the first sensing data to a sensing network element, where a sensing area corresponding to the first sensing data includes the first area.

Therefore, in this application, when determining that the first terminal device is in the first area, the sensing network element does not need to continuously initiate a positioning process on the terminal device, but uses a sensing capability of an access network device or the terminal device to determine, based on the sensing data, whether the terminal device is in the first area. This reduces signaling overheads.

With reference to the third aspect, in some implementations of the third aspect, the method further includes: The first device receives a first sensing request message from the sensing network element, where the first sensing request message is used to obtain the first sensing data.

With reference to the third aspect, in some implementations of the third aspect, the method further includes: The first device receives a second sensing request message from a first network element, where the second sensing request message is used to obtain the first sensing data.

With reference to the third aspect, in some implementations of the third aspect, the method further includes: The first device sends second sensing data to the sensing network element, where a sensing area corresponding to the second sensing data includes the first area, the second sensing data is used to determine second information, and the second information indicates that the first terminal device is located outside the first area.

With reference to the third aspect, in some implementations of the third aspect, the first network element is an access and mobility management function network element.

According to a fourth aspect, a sensing network element is provided, where the sensing network element includes a transceiver unit and a processing unit. The transceiver unit is configured to receive location information of a first area from a first network element, and is further configured to receive first sensing data from a first device, where a sensing area corresponding to the first sensing data includes the first area, and the first device is configured to perform sensing, and is further configured to send first information to the first network element. The processing unit is configured to determine the first information based on the location information of the first area and the first sensing data, where the first information indicates that a first terminal device is located in the first area.

Therefore, in this application, when determining that the first terminal device is in the first area, the sensing network element does not need to continuously initiate a positioning process on the terminal device, but uses a sensing capability of an access network device or the terminal device to determine, based on the sensing data, whether the terminal device is in the first area. This reduces signaling overheads.

With reference to the fourth aspect, in some implementations of the fourth aspect, the processing unit is further configured to determine a target access network device based on the location information of the first area. The transceiver unit is further configured to send a first sensing request message to the target access network device, where the first sensing request message is used to obtain the first sensing data.

With reference to the fourth aspect, in some implementations of the fourth aspect, the transceiver unit is further configured to obtain location information of the first terminal device. The processing unit is specifically configured to determine the first information based on the location information of the first area, the location information of the first terminal device, and the first sensing data.

With reference to the fourth aspect, in some implementations of the fourth aspect, the transceiver unit is specifically configured to enable the sensing network element to obtain the location information of the first terminal device when the first sensing data indicates that a first object enters or exits the first area.

With reference to the fourth aspect, in some implementations of the fourth aspect, the transceiver unit is specifically configured to send a positioning request message to a second network element, where the positioning request message is used to trigger the second network element to execute a positioning process. The transceiver unit is specifically configured to receive the location information of the first terminal device from the second network element.

With reference to the fourth aspect, in some implementations of the fourth aspect, the positioning request message includes the location information of the first area and/or information about the sensing area corresponding to the first sensing data.

With reference to the fourth aspect, in some implementations of the fourth aspect, the transceiver unit is specifically configured to receive a subscription request message from the first network element, where the subscription request message is used to request to obtain identification information of a terminal device in the first area, and the subscription request message carries the location information of the first area. The transceiver unit is further specifically configured to send, to the first network element, a subscription notification message used to respond to the subscription request message, where the subscription notification message carries the first information.

With reference to the fourth aspect, in some implementations of the fourth aspect, the transceiver unit is further configured to receive second sensing data from the first device, where a sensing area corresponding to the second sensing data includes the first area. The transceiver unit is further configured to send second information to the first network element. The processing unit is further configured to determine the second information based on the location information of the first area and the second sensing data, where the second information indicates that the first terminal device is located outside the first area.

With reference to the fourth aspect, in some implementations of the fourth aspect, the first information includes identification information of the first terminal device.

With reference to the fourth aspect, in some implementations of the fourth aspect, the first area is any one of the following: a service area of a local area data network, a service area of a network slice, or a communication restricted and forbidden area.

According to a fifth aspect, a first network element is provided. The first network element includes a transceiver unit and a processing unit. The processing unit is configured to generate location information of a first area. The transceiver unit is configured to send the location information of the first area to a sensing network element, and is further configured to receive first information from the sensing network element, where the first information indicates that a first terminal device is located in the first area, the first information is determined based on the location information of the first area and first sensing data, and a sensing area corresponding to the first sensing data includes the first area.

Therefore, in this application, when determining that the first terminal device is in the first area, the sensing network element does not need to continuously initiate a positioning process on the terminal device, but uses a sensing capability of an access network device or the terminal device to determine, based on the sensing data, whether the terminal device is in the first area. This reduces signaling overheads.

With reference to the fifth aspect, in some implementations of the fifth aspect, the transceiver unit is further configured to send first configuration information to the first terminal device based on the first information, where the first configuration information is used to trigger the first terminal device to send a service request message corresponding to a first service.

With reference to the fifth aspect, in some implementations of the fifth aspect, the processing unit is further configured to determine a first device based on the location information of the first area, and the first device is configured to perform sensing. The transceiver unit is further configured to send a second sensing request message to the first device, where the second sensing request message is used to obtain the first sensing data.

With reference to the fifth aspect, in some implementations of the fifth aspect, the transceiver unit is specifically configured to send a subscription request message to the sensing network element, where the subscription request message is used to request to obtain identification information of a terminal device in the first area, and the subscription request message carries the location information of the first area. The transceiver unit is further specifically configured to receive, from the sensing network element, a subscription notification message used to respond to the subscription request message, where the subscription notification message carries the first information.

With reference to the fifth aspect, in some implementations of the fifth aspect, the transceiver unit is further configured to receive second information from the sensing network element, where the second information indicates that the first terminal device is located outside the first area, the second information is determined based on the location information of the first area and second sensing data, and a sensing area corresponding to the second sensing data includes the first area.

With reference to the fifth aspect, in some implementations of the fifth aspect, second configuration information is sent to the first terminal device, where the second configuration information is used to delete information corresponding to the first service.

With reference to the fifth aspect, in some implementations of the fifth aspect, the first information further includes the identification information of the terminal device.

With reference to the fifth aspect, in some implementations of the fifth aspect, the first area is any one of the following: a service area of a local area data network, a service area of a network slice, or a communication restricted and forbidden area.

With reference to the fifth aspect, in some implementations of the fifth aspect, the first network element is an access and mobility management function network element.

According to a sixth aspect, a first device is provided. The first device includes a transceiver unit and a processing unit. The processing unit is configured to perform a sensing operation to generate first sensing data, where the first sensing data is used to determine first information, and the first information indicates that a first terminal device is located in a first area. The transceiver unit is configured to send the first sensing data to a sensing network element, where a sensing area corresponding to the first sensing data includes the first area.

Therefore, in this application, when determining that the first terminal device is in the first area, the sensing network element does not need to continuously initiate a positioning process on the terminal device, but uses a sensing capability of an access network device or the terminal device to determine, based on the sensing data, whether the terminal device is in the first area. This reduces signaling overheads.

With reference to the sixth aspect, in some implementations of the sixth aspect, the transceiver unit is further configured to receive a first sensing request message from the sensing network element, where the first sensing request message is used to obtain the first sensing data.

With reference to the sixth aspect, in some implementations of the sixth aspect, the transceiver unit is further configured to receive a second sensing request message from a first network element, where the second sensing request message is used to obtain the first sensing data.

With reference to the sixth aspect, in some implementations of the sixth aspect, the transceiver unit is further configured to send second sensing data to the sensing network element, where a sensing area corresponding to the second sensing data includes the first area, the second sensing data is used to determine second information, and the second information indicates that the first terminal device is located outside the first area.

According to a seventh aspect, a communication apparatus is provided, and the apparatus may include a processing unit, a sending unit, and a receiving unit. Optionally, the sending unit and the receiving unit may alternatively be a transceiver unit.

When the apparatus is a sensing network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, so that the sensing network element performs any method in the first aspect to the third aspect. When the apparatus is a chip in the sensing network element, the processing unit may be the processor, and the sending unit and the receiving unit may be an input/output interface, a pin, a circuit, or the like. The processing unit executes instructions stored in the storage unit, so that the chip performs the method in the first aspect to the third aspect. The storage unit is configured to store the instructions. The storage unit may be a storage unit (for example, a register or a cache) in the chip, or may be a storage unit (for example, a read-only memory or a random access memory) that is in the sensing network element and that is located outside the chip.

When the apparatus is a first network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, so that the first network element performs any method in the first aspect to the third aspect. When the apparatus is a chip in the first network element, the processing unit may be the processor, and the sending unit and the receiving unit may be an input/output interface, a pin, a circuit, or the like. The processing unit executes instructions stored in the storage unit, so that the chip performs the method in the first aspect to the third aspect. The storage unit is configured to store the instructions. The storage unit may be a storage unit (for example, a register or a cache) in the chip, or may be a storage unit (for example, a read-only memory or a random access memory) that is in the first network element and that is located outside the chip.

When the apparatus is a first device, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, so that the first device performs any method in the first aspect to the third aspect. When the apparatus is a chip in the first device, the processing unit may be the processor, and the sending unit and the receiving unit may be an input/output interface, a pin, a circuit, or the like. The processing unit executes instructions stored in the storage unit, so that the chip performs the method in the first aspect to the third aspect. The storage unit is configured to store the instructions. The storage unit may be a storage unit (for example, a register or a cache) in the chip, or may be a storage unit (for example, a read-only memory or a random access memory) that is in the first device and that is located outside the chip.

According to an eighth aspect, a communication apparatus is provided, including a processor and an interface circuit. The interface circuit is configured to receive a signal from another communication apparatus other than the communication apparatus, and transmit the signal to the processor, or send a signal from the processor to the another communication apparatus other than the communication apparatus. The processor is configured to implement any method in the first aspect to the third aspect by using a logic circuit or executing code instructions.

According to a ninth aspect, a computer-readable storage medium is provided. The computer-readable storage medium stores a computer program or instructions, and when the computer program or the instructions is or are executed, any method in the first aspect to the third aspect is implemented.

According to a tenth aspect, a computer program product including instructions is provided. When the instructions are run, any method in the first aspect to the third aspect is implemented.

According to an eleventh aspect, a computer program is provided. The computer program includes code or instructions. When the code or the instructions is or are run, the method in any possible implementation of the first aspect to the third aspect is implemented.

According to a twelfth aspect, a chip system is provided. The chip system includes a processor, and may further include a memory, configured to implement at least one method described in the first aspect to the third aspect. The chip system may include a chip, or may include the chip and another discrete component.

According to a thirteenth aspect, a communication system is provided. The system includes the apparatus (such as a sensing network element, a first network element, and a first device) according to any one of the fourth aspect to the sixth aspect.

In some implementations, the first device may be an access network device or a terminal device.

In some implementations, the first network element is an access management function network element.

In some implementations, the system further includes a second network element, and the second network element is a positioning management function network element.

### BRIEF DESCRIPTION OF DRAWINGS

FIG. 1 is a schematic diagram of an information transmission system applicable to an embodiment of this application;
FIG. 2 is a schematic diagram of another information transmission system applicable to an embodiment of this application;
FIG. 3 is a schematic flowchart of information transmission according to an embodiment of this application;
FIG. 4 is a schematic diagram of an example of a first area and a target terminal device according to an embodiment of this application; and
FIG. 5 and FIG. 6 each are a schematic diagram of a structure of a possible communication apparatus according to an embodiment of this application.

### DESCRIPTION OF EMBODIMENTS

The following describes technical solutions of this application with reference to accompanying drawings.

Terminologies such as "component", "module", and "system" used in this application are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within the process and/or the execution thread, and the components may be located on one computer and/or distributed between two or more computers. In addition, these components may be executed from various computer-readable media that store various data structures. For example, the components may communicate through a local and/or remote process and based on, for example, a signal having one or more data packets (for example, data from two components interacting with another component in a local system, a distributed system, and/or across a network like the Internet interacting with other systems by using the signal).

The method in embodiments of this application is applicable to a long term evolution (long term evolution, LTE) system, a long term evolution-advanced (long term evolution-advanced, LTE-A) technology system, an enhanced long term evolution-advanced (enhanced long term evolution-advanced, eLTE) technology system, a 5th generation (5th generation, 5G) mobile communication system like a new radio (New Radio, NR) system, the method may also be extended to similar radio communication systems, for example, wireless fidelity (wireless fidelity, Wi-Fi), worldwide interoperability for microwave access (worldwide interoperability for microwave access, WiMAX), and a cellular system related to a 3rd generation partnership project (3rd generation partnership project, 3gpp).

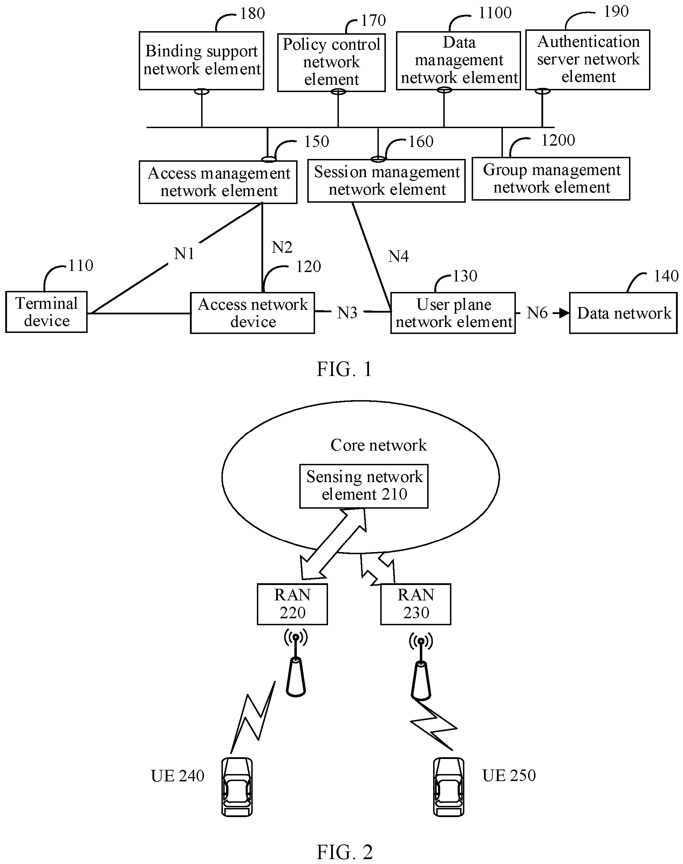

With the upgrading of mobile communication technologies, a 5G network is to be established in a flexible and efficient manner. The 5G network may use a communication sensing capability as a new capability. For example, a system architecture of the 5G network may be shown in FIG. 1.

FIG. 1 shows a network architecture used in embodiments of this application. Network elements that may be used in the network architecture are separately described.
1. A terminal device 110 may include various handheld devices, vehicle-mounted devices, wearable devices, computing devices that have a wireless communication function, or other processing devices connected to a wireless modem, and various forms of terminals, for example, a mobile station (mobile station, MS), a terminal (terminal), a user equipment (user equipment, UE), and a soft client. For example, the terminal device may be a water meter, an electricity meter, a sensor, or the like.
   In this application, the terminal device may further have a sensing capability. For example, a radio frequency module of the terminal device may be configured to send a radio frequency signal, and then learn of an environment by receiving and processing a reflected signal. Therefore, in this application, the terminal device may also detect and/or collect sensing data.
2. An access network device (radio access network, RAN) 120 is configured to provide a network access function for an authorized terminal device in a specific area, and can use transmission tunnels of different quality based on a level of the terminal device, a service requirement, and the like.

The access network device can manage a wireless resource, provide an access service for the terminal device, and forward a control signal and terminal device data between the terminal device and a core network. The access network device may also be understood as a base station in a conventional network.

In this application, when the base station performs wireless communication by using a millimeter-wave band, the base station naturally has a sensing capability similar to a sensing capability of radar. In other words, the base station has both a wireless communication capability and the sensing capability. Therefore, in this application, the access network device may also detect and/or collect sensing data. Alternatively, the access network device in this application may be referred to as a communication-radar integrated base station. The access network device can not only implement communication service coverage for a ground user, but also can detect a flight target such as an uncrewed aerial vehicle, a helicopter, or a bird, and a ground vehicle flow, a pedestrian, and the like.

3. A user plane network element 130 is used for packet routing and forwarding, quality of service (quality of service, QoS) processing on user plane data, and the like.

In a 5G communication system, the user plane network element may be a user plane function (user plane function, UPF) network element. In a future communication system, the user plane network element may still be the UPF network element, or may have another name. This is not limited in this application.

The UPF mainly provides user plane service processing functions, including routing a service, forwarding a packet, anchoring, mapping and executing quality of service (quality of service, QoS), identifying an uplink identity and routing the uplink identity to a data network, buffering a downlink packet, triggering a notification of downlink data arrival, and connecting to an external data network.

4. A data network 140 is a network used to provide data transmission.

In the 5G communication system, the data network may be a data network (data network, DN). In the future communication system, the data network may still be a DN, or may have another name. This is not limited in this application.

5. An access management network element 150 is mainly configured for mobility management, access management, and the like, and may be configured to implement functions other than session management in functions of a mobility management entity (mobility management entity, MME), for example, lawful interception and access authorization/authentication.

In the 5G communication system, the access management network element may be an access and mobility management function (access and mobility management function, AMF) network element. In the future communication system, the access management network element may still be the AMF network element, or may have another name. This is not limited in this application.

6. A session management network element 160 is mainly configured for session management, internet protocol (internet protocol, IP) address assignment and management of terminal devices, selection of termination points of manageable user plane functions, policy control and charging function interfaces, downlink data notification, and the like.

In the 5G communication system, the session management network element may be a session management function (session management function, SMF) network element. In the future communication system, the session management network element may still be the SMF network element, or may have another name. This is not limited in this application.

7. A policy control network element 170 is configured to guide a unified policy framework of network behavior, and provide policy rule information for a control plane function network element (for example, the AMF or SMF network element), and the like.

In the 5G communication system, the policy control network element may be a policy control function (policy control function, PCF) network element. In the future communication system, the policy control network element may still be the PCF network element, or may have another name. This is not limited in this application.

8. A binding support network element 180 is configured to search for a PCF associated with a session.

In the 5G communication system, the binding support network element may be a binding support function (binding support function, BSF) network element. In the future communication system, the binding support network element may still be the BSF network element, or may have another name. This is not limited in this application.

9. An authentication server 190 is configured to authenticate a service, generate a key to implement two-way authentication for a terminal device, and support a unified authentication framework.

In the 5G communication system, the authentication server may be an authentication server function (authentication server function, AUSF) network element. In the future communication system, the authentication server function network element may still be the AUSF network element, or may have another name. This is not limited in this application.

10. A data management network element 1100 is configured for terminal device identification, access authentication, registration, mobility management, and the like.

In the 5G communication system, the data management network element may be a unified data management (unified data management, UDM) network element. In the future communication system, the data management network element may still be the UDM element, or may have another name. This is not limited in this application.

It should be noted that the foregoing "network element" may also be referred to as an entity, a device, an apparatus, a module, or the like. This is not specifically limited in this application herein. In addition, in this application, for ease of understanding and description, the description of the "network element" is omitted in some descriptions. For example, an AMF network element is briefly referred to as an AMF. In this case, the "AMF" should be understood as the AMF network element or an AMF entity. Same or similar cases are not described below.

The network architecture may further include a location management service function (location management service, LMF) network element, and may initiate a positioning process on a terminal device, to obtain location information of the terminal device.

In this application, the network architecture may further include a sensing network element, and the sensing network element is responsible for enabling a sensing service in an end-to-end manner. For example, the sensing network element obtains a sensing requirement based on an internal network requirement or a requirement of a demander for sensing a service. After obtaining the sensing requirement, the sensing network element triggers the access network device or the terminal device to detect and/or collect sensing data.

It should be noted that in the 5G network, the sensing network element may be one of network elements in a 5G core network (5G core, 5GC). Alternatively, the sensing network element may be a non-core network element. Alternatively, the sensing network element may be independently deployed, or may be a sub-network element or a module in a network element of a 5G core network. For example, the sensing network element may be deployed together with the AMF network element or the LMF network element. This is not specifically limited in this application.

It should be understood that the foregoing network architecture applied to embodiments of this application is merely an example of a network architecture described from the perspective of a service architecture, and a network architecture applicable to embodiments of this application is not limited thereto. Any network architecture that can implement functions of the foregoing network elements is applicable to embodiments of this application.

For example, in some network architectures, network function entities such as an AMF, an SMF, a PCF, a GMF, and a UDM are all referred to as network function (Network Function, NF) network elements. Alternatively, in some other network architectures, a set of network elements such as an AMF, an SMF, a PCF, a GMF, and a UDM may be referred to as a control plane function (Control Plane Function, CPF) network element.

In this application, the proposed sensing network element may communicate with another network element. For example, the sensing network element may communicate with network elements such as a RAN network element, an AMF network element, an SMF network element, and an LMF network element.

The following uses network elements in a 5G system as an example to describe details of solutions. It may be understood that, when the solutions are used in an LTE system or a future communication system, each network element in the solutions may be replaced with another network element having a corresponding function. This is not limited in this application.

FIG. 2 shows a network architecture to which an embodiment of this application is applicable. The network architecture 200 includes a sensing network element, at least one RAN network element having the sensing capability, and/or at least one UE having the sensing capability, for example, a sensing network element 210, a RAN 220, and a RAN 230 shown in FIG. 2, and a UE 240 and a UE 250.

The sensing network element 210 is responsible for enabling a sensing service in an end-to-end manner. For example, the sensing network element 210 may obtain a sensing requirement based on an internal network requirement, or the sensing network element 210 receives a subscription request from another network element (for example, an AMF network element) to obtain the sensing requirement. After obtaining the sensing requirement, the sensing network element 210 triggers the RAN 220 and/or the RAN 230, or the UE 240 and/or the UE 250 to detect and/or collect sensing data. After obtaining the sensing data through detection, the RAN 220 and/or the RAN 230 or the UE 240 and/or the UE 250 provide or provides the sensing data to the sensing network element 210, and the sensing network element 210 performs processing based on the sensing data and returns a processing result to another network element. Alternatively, the sensing network element 210 performs optimization inside the network based on the sensing data, or the like.

It should be understood that FIG. 1 and FIG. 2 are merely examples of network architectures, and a network architecture applicable to embodiments of this application is not limited thereto. Any network architecture that can implement functions of the foregoing network elements is applicable to embodiments of this application.

A core network device may determine, based on current location information of a terminal device, whether to deliver network-related configuration information to the terminal device. For example, the terminal device subscribes to a data network name (data network name, DNN) corresponding to a local area data network (local area data network, LADN), and a relationship between a service area of an LADN and the LADN DNN is configured on the core network device. The service area of the LADN is identified by a group of tracking areas (tracking areas, TAs). When the terminal device registers with a network, the core network device determines, based on a location of the terminal device, that a TAI of the terminal device is in the service area of the LADN, and the terminal device may obtain LADN information (for example, the service area of the LADN and the LADN DNN) from a core network. For another example, a deployment area of a network slice also includes a TA granularity. When registering with the network, the terminal device may include identification information of a network slice that the terminal device requests to access. The core network device determines, based on the location of the terminal device, that the location supports the network slice that the terminal device requests to access, and the terminal device may obtain, from the core network, the identification information of the network slice that the terminal device is allowed to access.

In consideration of an actual deployment requirement, for example, a case in which the LADN or the network slice is deployed at a stadium or a factory, deployment of the TA granularity occupies an excessively large coverage area for the stadium or the factory, resulting in high deployment costs. Therefore, a deployment area with a small granularity (for example, a cell granularity) is more suitable for the stadium or the factory. However, in this scenario and another scenario in which the core network device needs to determine network configuration of the terminal based on the location of the terminal device, the core network device usually needs to continuously execute a positioning process on a large quantity of terminal devices to obtain location information of fine granularity of the terminal devices. This causes massive overheads. Therefore, an information transmission method, an apparatus, and a system are urgently needed to reduce signaling overheads.

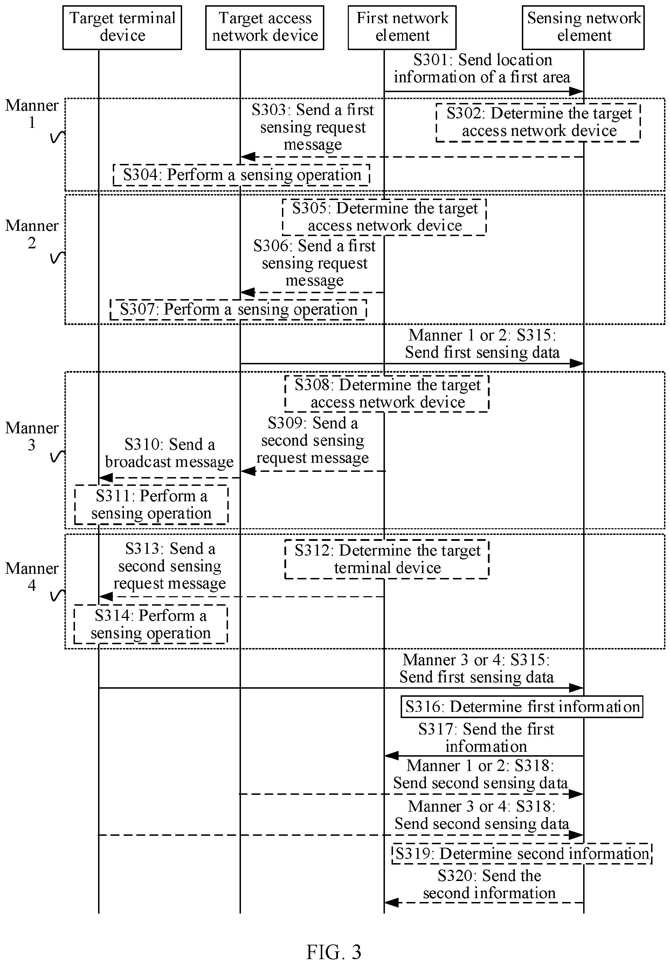

FIG. 3 is a schematic flowchart of an information transmission method 300 according to an embodiment of this application.

S301: A first network element sends location information of a first area to a sensing network element, and correspondingly, the sensing network element receives the location information of the first area from the first network element.

The first network element may be an access management network element AMF network element in FIG. 2.

For example, the first network element sends a subscription request message to the sensing network element, where the subscription request message is used to request to obtain identification information of a first terminal device in the first area, and the subscription request message carries the location information of the first area.

Alternatively, the subscription request message is used to request the sensing network element to report a terminal device identity list and whether each terminal device in the terminal device identity list is located in the first area.

Optionally, the sensing network element sends, to the first network element, a subscription response message used to respond to the subscription request message.

For different scenarios, the first network element may be configured with different first areas. The following separately uses first areas in different scenarios as examples.

### Scenario 1:

The first area is a service area of a local area data network LADN.

The service area of the LADN may be represented by using a tracking area identity (tracking area identity, TAI) list or a cell (cell) identity list. For example, the first area may be an area such as a stadium, a factory building, or an office building.

### Scenario 2:

The first area is a service area of a network slice.

The service area of the network slice may be at a cell granularity, and is represented by a cell identity. For example, the first area may be a service area of a private network slice deployed in a factory.

### Scenario 3:

The first area is a communication restricted and forbidden area.

The communication restricted and forbidden area is an area in which initiation of a communication service is not allowed or a terminal device cannot enter, and may be represented by a TAI identity list or a cell identity list. For example, the first area may be a sensitive area such as a military area, a prison, or a nuclear factory, and the terminal device located in the first area cannot initiate the communication service. Alternatively, the first area may be an area in which flight of an uncrewed aerial vehicle is forbidden or restricted, and the uncrewed aerial vehicle cannot enter the first area.

The foregoing describes only a possible scenario of the first area. This is not specifically limited in this application.

The first network element or the sensing network element may determine, based on the location information of the first area, a first device that needs to report first sensing data. The first device may perform a sensing operation to sense a surrounding environment to generate the first sensing data. The first device may alternatively trigger another device having a sensing capability to sense the surrounding environment to generate the first sensing data. An area corresponding to the first sensing data includes the first area. The sensing area corresponding to the first sensing data may be understood as an area used to obtain the first sensing data. In other words, the first sensing data is obtained by performing sensing in the area.

A device that performs the sensing operation may be an access network device having the sensing capability, or may be a terminal device having the sensing capability.

It should be understood that the device that performs the sensing operation may be one terminal device or one access network device, may be a plurality of terminal devices or a plurality of access network devices, or may be one or more terminal devices and one or more access network devices. For clarity, the following separately describes examples in which the access network device performs the sensing operation and the terminal device performs the sensing operation, and this is not limited.

In addition, when a plurality of devices perform sensing operations, the first sensing data may be understood as sensing data received from different devices, that is, multi-path sensing data, or may be understood as a result of fusion processing of the multi-path sensing data. The sensing area corresponding to the first sensing data may be understood as a sum of areas used to obtain the sensing data of all paths.

The following first describes a case in which the access network device having the sensing capability performs the sensing operation.

### Manner 1:

The method 300 includes steps S302 to S304.

S302: The sensing network element determines a target access network device (an example of the first device) based on the location information of the first area.

The target access network device is the first device that needs to report sensing data.

There may be one or more target access network devices, and the one or more target access network devices can perform general sensing in the first area.

In a possible implementation, the sensing network element may determine, based on sensing capability information of at least one access network device, the target access network device that needs to perform the sensing operation. The sensing capability information includes a sensing range of the access network device.

In a possible implementation, the target access network device may be a sensing-communication integrated base station.

The sensing range may be represented by a geographical area range. Alternatively, the sensing range may be represented by a location point. Alternatively, the sensing range may be represented by a sensing distance. For example, the sensing range is an area range within 1 km from the access network device. This is not specifically limited in this application.

The at least one access network device may report the sensing capability information of the at least one access network device to the sensing network element.

For example, the at least one access network device reports the sensing capability information to an AMF network element by using an Xn setup request (Xn setup request) message, and then the AMF network element sends the sensing capability information to the sensing network element.

For another example, the at least one access network device reports the sensing capability information to the AMF network element by using an Xn setup request (Xn setup request) message, the AMF network element stores the sensing capability information and location information of the corresponding access network device in an NRF network element, and the sensing network element requests, from the NRF network element, to obtain the sensing capability of the access network device.

For another example, there is a direct interface between the access network device and the sensing network element, and the access network device reports the sensing capability information of the access network device to the sensing network element.

Therefore, the sensing network element may determine, based on the location information of the first area and the sensing capability information of the at least one access network device, the target access network device that needs to perform the sensing operation.

It should be noted that the total sensing range of the target access network device determined by the sensing network element may cover a physical area corresponding to the first area. If there are a plurality of determined target access network devices, a sensing range area of one of the target access network devices may overlap the first area, and may be less than or greater than the first area. This is not limited in this application.

S303: The sensing network element sends a first sensing request message to the target access network device, where the first sensing request message is used to obtain the first sensing data.

The first sensing request message may be used to request the target access network device to perform sensing in the corresponding sensing range to generate the first sensing data. In other words, the first sensing request message may be used to trigger the target access network device to execute a sensing process.

In a possible implementation, the first sensing request message may be used to request the target access network device to perform sensing in a specified area to generate the first sensing data.

It should be understood that, if there are a plurality of determined target access network devices, the sensing network element sends the first sensing request message to the plurality of target access network devices.

S304: The target access network device performs the sensing operation to generate the first sensing data.

The target access network device that receives the first sensing request message performs the sensing operation. For example, the target access network device performs self-sending and self-receiving echo detection to sense the surrounding environment, and sends the first sensing data obtained through sensing to the sensing network element.

In this way, in Manner 1, the first device is the access network device having the sensing capability. The sensing network element determines the suitable access network device, and sends a sensing request message to the access network device. The access network device performs the sensing operation, and sends the generated first sensing data to the sensing network element.

### Manner 2:

The method 300 includes steps S305 to S307.

S305: The first network element determines a target access network device based on the location information of the first area.

The target access network device is the first device that needs to report sensing data.

In a possible implementation, the first network element may determine, based on sensing capability information of at least one access network device, the target access network device that needs to perform the sensing operation. The sensing capability information includes a sensing range of the corresponding access network device.

The at least one access network device may report the sensing capability information of the at least one access network device to the first network element.

For example, the at least one access network device reports the sensing capability information to the first network element by using an Xn setup request (Xn setup request) message.

A manner in which the first network element determines the target access network device based on the location information of the first area is similar to the manner described in step S302. For brevity, details are not described herein again.

S306: The first network element sends a second sensing request message to the target access network device, where the second sensing request message is used to obtain the first sensing data.

The second sensing request message may be used to request the target access network device to perform sensing in the corresponding sensing range to generate the first sensing data. Descriptions of the second sensing request message are similar to the descriptions of the first sensing request message in step S303. For brevity, details are not described herein again.

S307: The target access network device performs the sensing operation to generate the first sensing data.

The target access network device that receives the second sensing request message performs the sensing operation. For example, the target access network device performs self-sending and self-receiving echo detection to sense the surrounding environment. For example, the target access network device senses a pedestrian or a vehicle to generate the first sensing data.

In this way, in Manner 2, the first device is the access network device having the sensing capability. The first network element determines the suitable access network device, and sends a sensing request message to the access network device. The access network device performs the sensing operation, and sends the generated first sensing data to the sensing network element.

The foregoing describes a case in which the access network device having the sensing capability performs the sensing operation, and the following describes a case in which the terminal device having the sensing capability performs the sensing operation.

### Manner 3:

The method 300 includes steps S308 to S311.

S308: The first network element determines a target access network device (an example of the first device) based on the location information of the first area.

There may be one or more target access network devices, and a service area of the one or more target access network devices can cover the first area. It may also be understood that the one or more target access network devices are located in the first area.

It should be understood that the target access network device may trigger a terminal device in the service area to execute a sensing process. In other words, the target access network device may not have the sensing capability, the terminal device in the service area of the target access network device has the sensing capability, and a sensing area of the terminal device in the service area of the target access network device can cover the first area.

S309: The first network element sends a second sensing request message to the target access network device, where the second sensing request message is used to obtain the first sensing data.

The second sensing request message may request the first device to send a broadcast message. The broadcast message is used to trigger the corresponding terminal device to execute the sensing process.

It should be understood that the terminal device that executes the sensing process is a target terminal device that receives the broadcast message and has the sensing capability.

S310: The target access network device sends the broadcast message based on the second sensing request message.

S311: The target terminal device performs the sensing operation to generate the first sensing data.

There may be one or more target terminal devices that receive the broadcast message. The one or more target terminal devices may enable a sensing function based on indication information in the broadcast message. For example, the target terminal device performs self-sending and self-receiving echo detection to sense the surrounding environment. For example, the target terminal senses an obstacle in a building to generate the first sensing data.

In this way, in Manner 3, the first network element determines the suitable access network device, and sends a sensing request message to the access network device. The access network device sends the broadcast message based on the sensing request message to trigger the terminal device to perform the sensing operation to generate the first sensing data.

### Manner 4:

The method 300 includes steps S312 to S314.

S312: The first network element determines a target terminal device (an example of the first device) based on the location information of the first area.

There may be one or more target terminal devices, and the one or more target terminal devices have the sensing capability.

In a possible manner, the first network element may determine the target terminal device based on the location information of the first area and location information (for example, identified by a TAI) that is of the terminal device and that is stored in the context.

For example, the first network element may determine, based on the location information that is of the terminal device and that is stored in the context, a terminal device that is near or close to the first area as the target terminal device.

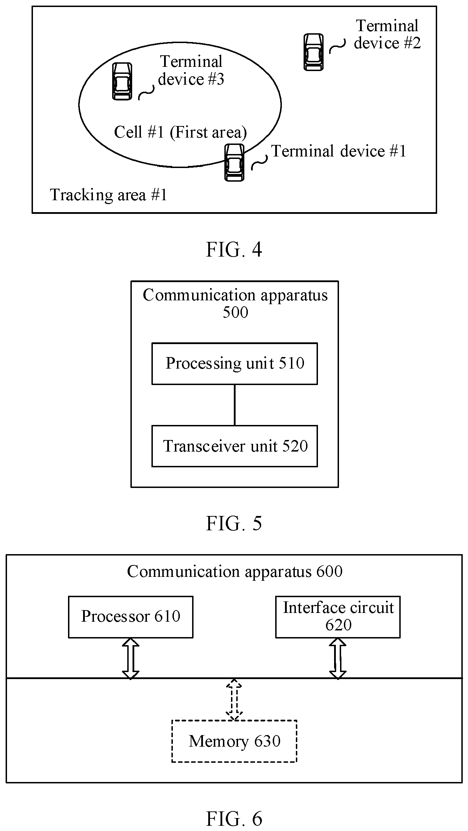

It should be understood that the first network element cannot directly determine, based on the location information that is of the terminal device and that is stored in the context, whether the terminal device is located in the first area. Therefore, the first network element needs to execute a subsequent process to determine whether the target terminal device is actually located in the first area. For example, with reference to FIG. 4, it is assumed that the location information of the first area is represented by a cell identity (cell identity). In a process of determining the target terminal device, the first network element first determines, based on the cell identity corresponding to the first area, a tracking area in which the first area is located, and the first network element selects, based on the location information that is of the terminal device and that is stored in the context, a terminal device located in the tracking area as the target terminal device. As shown in FIG. 4, it is assumed that a cell corresponding to the first area is a cell #1, and the cell #1 belongs to a tracking area #1. It may be determined, based on the location information that is of the terminal device and that is stored in the context, that a terminal device #1, a terminal device #2, and a terminal device #3 are located in the tracking area #1. Therefore, the first network element determines the terminal device #1, the terminal device #2, and the terminal device #3 as the target terminal devices.

S313: The first network element sends a second sensing request message to the target terminal device, where the second sensing request message is used to obtain the first sensing data.

In a possible implementation, the first network element sends the second sensing request message to the target terminal device by using a NAS message.

In other words, the first network element sends the NAS message to the target terminal device, where the NAS message carries instruction information for triggering the target terminal device to perform the sensing operation.

In other words, the second sensing request message may trigger the target terminal device to execute a sensing process to generate the first sensing data.

S314: The target terminal device performs the sensing operation to generate the first sensing data.

For example, the target terminal device performs self-sending and self-receiving echo detection, and senses a surrounding environment to generate the first sensing data.

In this way, in Manner 4, the first network element determines the suitable terminal device, and sends the sensing request message to the terminal device to trigger the terminal device to perform the sensing operation to generate the first sensing data.

The foregoing separately describes the four manners of generating the first sensing data. The first device needs to send the first sensing data to the sensing network element.

S315: The first device sends the first sensing data to the sensing network element, and correspondingly, the sensing network element receives the first sensing data from the first device.

If the target access network device performs the sensing operation to generate the first sensing data, for example, in the foregoing Manner 1 and Manner 2, the target access network device may send the first sensing data to the sensing network element through the interface between the target access network device and the sensing network element, or the first access network device may send the first sensing data to the sensing network element by using a UPF network element. This is not specifically limited in this application.

If the target terminal device performs the sensing operation to generate the first sensing data, for example, in the foregoing Manner 3 and Manner 4, the target terminal device may send the first sensing data to the first network element by using the NAS message, and the first network element sends the first sensing data to the sensing network element. Alternatively, the target terminal device may send the first sensing data to a UPF network element through the corresponding access network device, and the UPF network element sends the first sensing data to the sensing network element. This is not specifically limited in this application.

The sensing network element may determine, based on the location information of the first area and the first sensing data, whether the first terminal device is located in the first area.

It should be noted that there may be one or more first terminal devices. The first terminal device is a terminal device that needs to be reported by the sensing network element to the first network element and that is located in the first area. The first terminal device may be a same terminal device as the target terminal device that performs the sensing operation, or the first terminal device may be a terminal device different from the target terminal device. For example, the first terminal device is a terminal device in a sensing range of the target terminal device.

S316: The sensing network element determines first information based on the location information of the first area and the first sensing data, where the first information indicates that the first terminal device is located in the first area.

In a possible implementation, the first information further indicates the identification information of the first terminal device.

The sensing network element may obtain the identification information of the first terminal device based on the first sensing data. For example, the first sensing data includes specific information of the first terminal device (for example, a license plate number of a vehicle), and the sensing network element may obtain the identification information of the first terminal device based on the specific information.

For example, the identification information of the first terminal device may be a subscription permanent identifier (subscription permanent identifier, SUPI) or another internal terminal device identity that can be identified by the sensing network element.

If the sensing network element may determine, based on the first sensing data and the location information of the first area, whether the first terminal device is located in the first area, the sensing network element may directly notify the first network element whether the first terminal device is located in the first area. For example, if the first terminal device is in the first area, the sensing network element sends the first information to the first network element.

If the sensing network element cannot determine, based on only the first sensing data and the location information of the first area, whether the first terminal device is located in the first area, the sensing network element may further obtain location information of the first terminal device, and determine, based on the first sensing data, the location information of the first area, and the location information of the first terminal device, whether the first terminal device is located in the first area.

In this case, S316 may be understood as follows: The sensing network element determines, based on the location information of the first area and the first sensing data, that location information of a terminal device related to the first area needs to be obtained; then the sensing network element obtains the location information of the first terminal device, where the first terminal device is located in the first area; and the sensing network element determines the first information.

The determining that the location information of the terminal device related to the first area needs to be obtained may be understood as determining that location information of a terminal device in the first area needs to be obtained, or may be understood as determining that location information of a terminal device in the sensing area corresponding to the first sensing data needs to be obtained, or may be understood as determining that a positioning request message needs to be sent to a second network element, or may be understood as determining that the second network element needs to be triggered to execute a positioning process.

For example, when the first sensing data indicates that a first object (for example, a person, a vehicle, or another article) enters or exits the first area, the sensing network element determines that the location information of the terminal device related to the first area needs to be obtained.

The positioning request message sent by the sensing network element to the second network element may be used to trigger the second network element to execute the positioning process. For example, the second network element may be an LMF network element.

In a possible implementation, the positioning request message includes the location information of the first area and/or information about the sensing area corresponding to the first sensing data. The sensing area corresponding to the first sensing data may be a sensing area of the first device.

For example, if the sensing network element learns, based on the first sensing data, that the first object enters or exits the first area, it is possible that the terminal device enters or exits the first area, and the sensing network element triggers the second network element to initiate the positioning process on the terminal device in the first area or the sensing area of the first device. The second network element obtains the location information of a first terminal through the positioning process, and returns the location information of the first terminal device to the sensing network element. The sensing network element determines, based on the location information of the first terminal device, whether the first terminal device is located in the first area. In this way, in this application, the positioning process does not need to be continuously initiated on the terminal device, and a sensing function may be used. When sensing data indicates that a person or an object moves in an area, the positioning process is triggered.

In addition, the sensing network element may determine, in the following two determining manners, whether the first terminal device is located in the first area. In one manner, the sensing network element may determine, based on only a physical geographical location of the first terminal device, whether the first terminal device is located in the first area. In the other manner, the sensing network element may determine, based on a physical geographical location of the first terminal device and a movement direction of the first terminal device, whether the first terminal device is located in the first area. For example, if a movement direction of a terminal device at an edge of the first area is to move outside the first area, the sensing network element may pre-determine that the terminal device is located outside the first area; and if the movement direction of the terminal device at the edge of the first area is to move in the first area, the sensing network element may pre-determine that the terminal device is located in the first area.

For example, in the foregoing positioning process, the second network element may obtain, from the AMF, an identity of a terminal device corresponding to a TAI related to the first area or the sensing area corresponding to the first sensing data, and then obtain location information of the terminal device based on step 12 in section 6.1.2 or step 8 in section 6.1.1 of 3GPP TS 23.273 v17.2.0. The second network element may further select, based on the obtained location information of the terminal device and the location information of the first area and/or the information about the sensing area corresponding to the first sensing data, terminal devices located in the first area and/or the sensing area corresponding to the first sensing data, and send location information of the terminal devices to the sensing network element.

It should be understood that a manner in which the sensing network element determines whether the first terminal device is located in the first area, that is, a manner in which the sensing network element determines the first information depends on a determining algorithm of the sensing network element. This is not specifically limited in this application.

S317: The sensing network element sends the first information to the first network element.

For example, the sensing network element may send, to the first network element, a subscription notification message in response to the subscription request message, where the subscription notification message carries the first information.

The first network element sends first configuration information to the first terminal device based on the first information.

Optionally, the first configuration information is used to trigger the first terminal device to send a service request message corresponding to a first service.

For example, in Scenario 1, the first area is the service area of the LADN, and the first information indicates that the first terminal device is in the first area. The first network element initiates a terminal device configuration update (UE configuration update) process, and includes LADN information in the first configuration information sent to the first terminal device. The LADN information may include an LADN DNN and the service area of the LADN. In this case, the first terminal device may send a service request message of a first service corresponding to the LADN.

For example, in Scenario 2, the first area is the service area of the network slice, and the first information indicates that the first terminal device is in the first area. The first network element initiates a terminal device configuration update (UE configuration update) process, and includes identification information of the network slice that allows the first terminal device to access in the first configuration information sent to the first terminal device. The identification information of the network slice may include an identity S-NSSAI of the network slice deployed in the first area. In this case, the first terminal device may send a service request message of a first service corresponding to the network slice.

In Scenario 3, the first area is the communication restricted and forbidden area, and the first information indicates that the first terminal device is in the first area. The first network element initiates a terminal device configuration update (UE configuration update) process, and notifies, by using the NAS message, that the first terminal device is currently located in the forbidden area, or notifies the first terminal device to exit a current location.

In a possible implementation, when the first terminal device exits the first area, the method 300 further includes steps S318 to S320.

S318: The sensing network element receives second sensing data from the first device.

A sensing area corresponding to the second sensing data includes the first area, and descriptions of the sensing area corresponding to the second sensing data is similar to descriptions of the sensing area corresponding to the first sensing data. For brevity, details are not described herein again.

Descriptions of receiving the second sensing data by the sensing network element from the first device is similar to descriptions of receiving the first sensing data by the sensing network element from the first device. For brevity, details are not described herein again.

For example, the access network device or the terminal device having the sensing function may periodically report sensing data.

S319: The sensing network element determines second information based on the location information of the first area and the second sensing data.

The second information indicates that the terminal device is located outside the first area, or the second information indicates that the terminal device exits the first area.

A manner in which the sensing network element determines the second information is similar to a manner in which the sensing network element determines the first information. For brevity, details are not described herein again.

S320: The sensing network element sends the second information to the first network element.

A manner in which the sensing network element sends the second information to the first network element is similar to a manner in which the sensing network element sends the first information to the first network element. For brevity, details are not described herein again.

The first network element sends second configuration information to the first terminal device, where the second configuration information corresponds to the second information.

Optionally, the second configuration information is used to trigger the first terminal device to delete information corresponding to the first service.

For example, in Scenario 1, the first area is the service area of the LADN, and the second information indicates that the first terminal device is located outside the first area. The first network element initiates a terminal device configuration update (UE configuration update) process. The first configuration information sent to the first terminal device is used to trigger the first terminal device to delete LADN information (an example of the information corresponding to the first service). If the first terminal device has established a PDU session of the LADN, the first terminal device may further notify a corresponding SMF to delete the PDU session.

For example, in Scenario 2, the first area is the service area of the network slice, and the first information indicates that the first terminal device is in the first area. The first network element initiates a terminal device configuration update (UE configuration update) process, and includes identification information of the network slice that rejects access of the first terminal device in the first configuration information sent to the first terminal device. The identification information of the network slice that rejects the access may include an identity S-NSSAI of the network slice deployed in the first area. If the first terminal device has established a PDU session corresponding to the network slice, the first terminal device may further notify a corresponding SMF to delete the PDU session.

Therefore, in this application, the first network element requests to learn of information about whether the terminal device is in the first area, and does not need to continuously initiate the positioning process on the terminal device, but uses the sensing capability of the access network device or the terminal device to determine, based on the sensing data, whether the terminal device is in the first area. This reduces signaling overheads.

FIG. 5 and FIG. 6 each are a schematic diagram of a structure of a possible communication apparatus according to an embodiment of this application. These communication apparatuses may be configured to implement functions of the sensing network element, the first network element, and the first device in the foregoing method embodiments, and therefore can also implement beneficial effects of the foregoing method embodiments. In this embodiment of this application, the communication apparatus may be a sensing network element, a first network element, and a first device, or may be a module (for example, a chip) used in the sensing network element, the first network element, and the first device.

As shown in FIG. 5, a communication apparatus 400 includes a processing unit 510 and a transceiver unit 520. The communication apparatus 400 is configured to implement functions of the sensing network element, the first network element, or the first device in the method embodiment shown in FIG. 3. Alternatively, the communication apparatus 400 may include a module configured to implement any function or operation of the sensing network element, the first network element, or the first device in the method embodiment shown in FIG. 3. The module may be all or partially implemented by using software, hardware, firmware, or any combination thereof.

When the communication apparatus 400 is configured to implement the function of the sensing network element in the method embodiment shown in FIG. 3, the transceiver unit 520 is configured to receive location information of a first area from the first network element, and is further configured to receive first sensing data from the first device, where a sensing area corresponding to the first sensing data includes the first area, and the first device is configured to perform sensing, and is further configured to send first information to the first network element. The processing unit 510 is configured to determine the first information based on the location information of the first area and the first sensing data, where the first information indicates that a first terminal device is located in the first area.

When the communication apparatus 400 is configured to implement the function of the first network element in the method embodiment shown in FIG. 3, the processing unit 510 is configured to generate the location information of the first area. The transceiver unit 520 is configured to send the location information of the first area to the sensing network element, and is further configured to receive the first information from the sensing network element, where the first information indicates that the first terminal device is located in the first area, the first information is determined based on the location information of the first area and first sensing data, and a sensing area corresponding to the first sensing data includes the first area.

When the communication apparatus 400 is configured to implement the function of the first device in the method embodiment shown in FIG. 3, the processing unit 510 is configured to perform a sensing operation to generate the first sensing data, where a sensing area corresponding to the first sensing data includes the first area, the first sensing data is used to determine the first information, and the first information indicates that the first terminal device is located in the first area. The transceiver unit 520 is configured to send the first sensing data to the sensing network element.

Therefore, in this application, when determining that the first terminal device is in the first area, the sensing network element does not need to continuously initiate a positioning process on the terminal device, but uses a sensing capability of an access network device or the terminal device to determine, based on the sensing data, whether the terminal device is in the first area. This reduces signaling overheads.

For more detailed descriptions of the processing unit 510 and the transceiver unit 520, refer to related descriptions in the method embodiment shown in FIG. 3. Details are not described herein again.

As shown in FIG. 6, a communication apparatus 600 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to store instructions executed by the processor 610, or store input data required by the processor 610 to run the instructions, or store data generated after the processor 610 runs the instructions.

When the communication apparatus 600 is configured to implement the method shown in FIG. 3, the processor 610 is configured to implement a function of the processing unit 510, and the interface circuit 620 is configured to implement a function of the transceiver unit 520.

When the communication apparatus 600 is configured to implement the method shown in FIG. 3, the communication apparatus 600 includes the processor 610 and the interface circuit 620. The processor 610 and the interface circuit 620 are coupled to each other. It may be understood that the interface circuit 620 may be the transceiver or the input/output interface. Optionally, the communication apparatus 600 may further include a memory 1730, configured to store instructions executed by the processor 610, or store input data required by the processor 610 to run the instructions, or store data generated after the processor 610 runs the instructions.

When the communication apparatus 600 is configured to implement the method shown in FIG. 3, the processor 610 is configured to implement the function of the processing unit 510, and the interface circuit 620 is configured to implement the function of the transceiver unit 520.

When the communication apparatus is a chip used in the sensing network element, the sensing network element chip implements a function of the sensing network element in the foregoing method embodiment. The sensing network element chip receives information from another module (for example, a radio frequency module or an antenna) in the sensing network element. The information is sent by the first network element or another network element to the sensing network element. Alternatively, the sensing network element chip sends information to the first network element or another module (for example, a radio frequency module or an antenna) in the another network element. The information is sent by the sensing network element to the first network element or the another network element.

When the communication apparatus is a chip used in the first network element, the first network element chip implements a function of the first network element in the foregoing method embodiment. The first network element chip receives information from another module (for example, a radio frequency module or an antenna) in the sensing network element. The information is sent by the sensing network element to the first network element or the another network element. Alternatively, the first network element chip sends information to the sensing network element or the another module (for example, a radio frequency module or an antenna) in the another network element. The information is sent by the first network element to the sensing network element or the another network element.

When the communication apparatus is a chip used in the first device, the first device chip implements a function of the first device in the foregoing method embodiment. The first device chip receives information from another module (for example, a radio frequency module or an antenna) in another network element. The information is sent by the another network element to the first device. Alternatively, the first device chip sends information to another module (for example, a radio frequency module or an antenna) in the another network element. The information is sent by the first device to the another network element.

It can be understood that a processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, the storage medium is coupled to the processor, so that the processor can read information from the storage medium and write information into the storage medium. Certainly, the storage medium may be a component of the processor. The processor and the storage medium may be disposed in the ASIC. In addition, the ASIC may be located in a network device or a terminal device. Certainly, the processor and the storage medium may alternatively exist as discrete components in the network device or the terminal device.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs and instructions. When the computer programs or instructions are loaded and executed on a computer, all or some of processes or functions in embodiments of this application are executed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk, or a magnetic tape; or may be an optical medium, for example, a DVD, or may be a semiconductor medium, for example, a solid state disk (solid state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", and the like are merely used to distinguish between different objects, for example, to distinguish between different network devices, and constitute no limitation on the scope of embodiments of this application. Embodiments of this application are not limited thereto.

It should be further understood that in this application, "when" and "if" both refer to corresponding processing performed by a network element in an objective case, are not intended to limit time, do not require a determining action to be performed during implementation of the network element, and do not imply that there is any other limitation.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. An information transmission method, wherein the method comprises:
receiving, by a sensing network element, location information of a first area from a first network element;
receiving, by the sensing network element, first sensing data from a first device, wherein a sensing area corresponding to the first sensing data comprises the first area, and the first device is configured to perform sensing;
determining, by the sensing network element, first information based on the location information of the first area and the first sensing data, wherein the first information indicates that a first terminal device is located in the first area; and
sending, by the sensing network element, the first information to the first network element.

2. The method according to claim 1, wherein the method further comprises:
determining, by the sensing network element, a target access network device based on the location information of the first area; and
sending, by the sensing network element, a first sensing request message to the target access network device, wherein the first sensing request message is used to obtain the first sensing data.

3. The method according to claim 1 or 2, wherein the method further comprises:
obtaining, by the sensing network element, location information of the first terminal device; and
the determining, by the sensing network element, first information based on the location information of the first area and the first sensing data comprises:
determining, by the sensing network element, the first information based on the location information of the first area, the location information of the first terminal device, and the first sensing data.

4. The method according to claim 3, wherein the obtaining, by the sensing network element, location information of the first terminal device comprises:
obtaining, by the sensing network element, the location information of the first terminal device when the first sensing data indicates that a first object enters or exits the first area.

5. The method according to claim 3 or 4, wherein the obtaining, by the sensing network element, the location information of the first terminal device when the first sensing data indicates that a first object enters or exits the first area comprises:
when the first sensing data indicates that the first object enters or exits the first area, sending, by the sensing network element, a positioning request message to a second network element, wherein the positioning request message is used to trigger the second network element to execute a positioning process; and
the obtaining, by the sensing network element, the location information of the first terminal device comprises:
receiving, by the sensing network element, the location information of the first terminal device from the second network element.

6. The method according to claim 5, wherein the positioning request message comprises the location information of the first area and/or information about the sensing area corresponding to the first sensing data.

7. The method according to any one of claims 1 to 6, wherein the receiving, by a sensing network element, location information of a first area from a first network element comprises:
receiving, by the sensing network element, a subscription request message from the first network element, wherein the subscription request message is used to request to obtain identification information of a terminal device in the first area, and the subscription request message carries the location information of the first area; and
the sending, by the sensing network element, the first information to the first network element comprises:
sending, by the sensing network element to the first network element, a subscription notification message used to respond to the subscription request message, wherein the subscription notification message carries the first information.

8. The method according to any one of claims 1 to 7, wherein the method further comprises:
receiving, by the sensing network element, second sensing data from the first device, wherein a sensing area corresponding to the second sensing data comprises the first area;
determining, by the sensing network element, second information based on the location information of the first area and the second sensing data, wherein the second information indicates that the first terminal device is located outside the first area; and
sending, by the sensing network element, the second information to the first network element.

9. The method according to any one of claims 1 to 8, wherein the first information comprises identification information of the first terminal device.

10. The method according to any one of claims 1 to 9, wherein the first area is any one of the following: a service area of a local area data network, a service area of a network slice, or a communication restricted and forbidden area.

11. The method according to any one of claims 1 to 10, wherein the first network element is an access and mobility management function network element.

12. An information transmission method, wherein the method comprises:
sending, by a first network element, location information of a first area to a sensing network element; and
receiving, by the first network element, first information from the sensing network element, wherein the first information indicates that a first terminal device is located in the first area, the first information is determined based on the location information of the first area and first sensing data, and a sensing area corresponding to the first sensing data comprises the first area.

13. The method according to claim 12, further comprising:
sending, by the first network element, first configuration information to the first terminal device based on the first information, wherein the first configuration information is used to trigger the first terminal device to send a service request message corresponding to a first service.

14. The method according to claim 12 or 13, wherein the method further comprises:
determining, by the first network element, a first device based on the location information of the first area, wherein the first device is configured to perform sensing; and
sending, by the first network element, a second sensing request message to the first device, wherein the second sensing request message is used to obtain the first sensing data.

15. The method according to any one of claims 12 to 14, wherein the sending, by a first network element, location information of a first area to a sensing network element comprises:
sending, by the first network element, a subscription request message to the sensing network element, wherein the subscription request message is used to request to obtain identification information of a terminal device in the first area, and the subscription request message carries the location information of the first area; and
the receiving, by the first network element, first information from the sensing network element comprises:
receiving, by the first network element from the sensing network element, a subscription notification message used to respond to the subscription request message, wherein the subscription notification message carries the first information.

16. The method according to any one of claims 12 to 15, wherein the method further comprises:
receiving, by the first network element, second information from the sensing network element, wherein the second information indicates that the first terminal device is located outside the first area, the second information is determined based on the location information of the first area and second sensing data, and a sensing area corresponding to the second sensing data comprises the first area.

17. The method according to claim 16, wherein the method further comprises:
sending, by the first network element, second configuration information to the first terminal device, wherein the second configuration information is used to delete information corresponding to the first service.

18. The method according to any one of claims 12 to 17, wherein the first information further comprises the identification information of the terminal device.

19. The method according to any one of claims 12 to 18, wherein the first area is any one of the following: a service area of a local area data network, a service area of a network slice, or a communication restricted and forbidden area.

20. The method according to any one of claims 12 to 19, wherein the first network element is an access and mobility management function network element.

21. An information transmission apparatus, comprising a unit configured to perform the method according to any one of claims 1 to 11.

22. An information transmission apparatus, comprising a unit configured to perform the method according to any one of claims 12 to 20.

23. A communication apparatus, comprising a processor, wherein the processor is coupled to a memory, the memory is configured to store a computer program or instructions, and the processor is configured to execute the computer program or the instructions to perform the method according to any one of claims 1 to 11 or claims 12 to 20.

24. A computer-readable storage medium, comprising a computer program, wherein when the computer program is run on a computer, the computer is enabled to perform the method according to any one of claims 1 to 11 or claims 12 to 20.

25. A computer program product, wherein when the computer program product runs on a computer, the computer is enabled to perform the method according to any one of claims 1 to 11 or claims 12 to 20.

26. A chip system, comprising a processor, configured to invoke a computer program from a memory and run the computer program, to enable a communication device mounted with the chip system to perform the method according to any one of claims 1 to 11 or claims 12 to 20.

27. An information transmission system, comprising the apparatus according to claim 21 and the apparatus according to claim 22.
